# EUROPÄISCHE PATENTSCHRIFT

(11) **EP 0 641 942 B1**
(45) Veröffentlichungstag und Bekanntmachung des Hinweises auf die Patenterteilung: **02.12.1998**
(21) Anmeldenummer: 94109350.2
(22) Anmeldetag: 17.06.1994
(51) Int. Cl.: F16B 21/08

(54) **Druckverschluss für das lösbare Verbinden zweier Bauteile**
Push fastener for the releasable joining of two elements
Dispositif de fermeture à pression pour la fixation amovible de deux éléments

(30) Priorität: 07.08.1993 DE 9311795 U
(43) Veröffentlichungstag der Anmeldung: 08.03.1995
(73) Patentinhaber: Fairchild Fasteners Europe - Camloc GmbH, 65779 Kelkheim (DE)
(72) Erfinder: Stölken, Jochen, D-65719 Hofheim (DE); Wolfhard, Filitz, D-61381 Friedrichsdorf (DE)
(74) Vertreter: KEIL & SCHAAFHAUSEN Patentanwälte

(56) Entgegenhaltungen:
- EP-A- 0 351 293
- EP-A- 0 467 295
- WO-A-93/14324
- DE-A- 3 612 199
- DE-A- 4 032 565
- FR-A- 431 834
- US-A- 3 019 501
- PATENT ABSTRACTS OF JAPAN vol. 015, no. 146 (M-1102), 12.April 1991 & JP-A-03 025045 (NISSAN MOTOR CO LTD)

## Beschreibung

Die Erfindung bezieht sich auf einen Druckverschluß für das lösbare Verbinden zweier Bauteile nach dem Oberbegriff des Anspruchs 1.

Aus der US-A-3,019,501 ist ein derartiger Druckverschluß bekannt, bei welchem die Arretierungsschenkel an dem Druckknopf selbst und mit diesem bewegbar sind. In Verriegelungsstellung wirken die Arretierungsvorsprünge mit der Schulter des Einsatzes eines Aufnahmegehäuses zusammen, welches auf der Rückseite des zweiten Bauteils angebracht ist. In dem Einsatz ist ein axial verschieblicher Scheibenkörper mit einer dem Druckknopfkopf zugewandten Schrägfläche vorgesehen, wobei zum Lösen des Druckverschlußes der Druckknopf mit seinen dem Druckknopfkopf gegenüberliegenden Ende vorgesehenen Arretierungsmitteln in die Scheibenöffnung eingedrückt werden kann, so daß beim Herausziehen des Druckknopfes aus dem Verschlußgehäuse der Scheibenkörper zunächst mitgenommen wird, bis er an die erwähnte Schulter des Gehäuseeinsatzes anschlägt, so daß der Druckknopf vollständig aus dem Verschlußgehäuse herausgezogen werden kann. Dieser Druckverschluß ist aufwendig in seinem Aufbau, indem er besondere Arretierungsmittel auf der Rückseite des zweiten Bauteils erforderlich macht. Die Funktionsfähigkeit ist ferner nur dann gewährleistet, wenn die Reibung zwischen Druckknopf und Scheibenkörper größer ist als die Reibung zwischen dem Scheibenkörper und dem diese aufnehmenden Gehäuseeinsatz, was in nachteiliger Weise stark toleranzabhängig ist.

Aus der EP-A-0 467 295 ist ein aus zwei Baugruppen bestehender Druckverschluß bekannt, bei welchem jede Baugruppe an einem der beiden miteinander zu verbindenden Bauteile befestigt werden muß. Bei Druckbeanspruchung gelangen die elastischen Schenkel der einen Baugruppe mit Rastvorsprüngen in eine innen umlaufende Rastnut der zweiten Baugruppe, in welcher die Position der beiden Baugruppen mittels eines in der zweiten Baugruppe geführten Verriegelungsstift gesichert werden kann. Zum Lösen des Druckverschlußes muß der Verriegelungsstift gegen die Wirkung einer Feder in eine Freigabeposition gedrückt werden, wonach die erste Baugruppe von der zweiten Baugruppe unter elastischem Ausweichen der Verriegelungsschenkel wieder abgezogen werden kann. Dieser Druckverschluß eignet sich nicht für das Verbinden zweier Bauteile, welche lediglich eine Bohrung aufweisen und bei welcher der Druckverschluß von einer Seite der beiden Bauteile zu montieren und von der gleichen Seite auch wieder zu demontieren ist.

Aus der EP-A-0 351 293 ist es bekannt, einen Moduleinsatz an einer Aufnahmeschiene lösbar festzulegen. Zu diesem Zweck trägt der Moduleinsatz Arretierungsschenkel mit Arretierungsvorsprüngen an ihren freien Enden, welche hinter einwärts gebogenen Randleisten der Schienen einrasten können. Zum Lösen der Verriegelungsschenkel aus ihrer Verriegelungsstellung wird Druck auf ein auf dem Moduleinsatz verschieblich gelagerten Ringkörper ausgeübt, mit Hilfe dessen die Arretierungsschenkel radial nach innen aus ihrer Verriegelungsstellung mit den Randleisten gedrückt werden können.

Aufgabe der vorliegenden Erfindung ist es, einen Druckverschluß der eingangs genannten Art so auszubilden, daß bei einfachem Aufbau sowie sicherer und schneller Montage eine zuverlässige aber lösbare Verbindung der Bauteile auf wirtschaftliche Weise gewährleistet ist; in besonderen Fällen, in welchen der Druckverschluß Bewegungen und Erschütterungen ausgesetzt ist, wie bspw. bei der Befestigung der Schallschutzhaube eines Kraftfahrzeugs an ihrem Halter, soll der Druckverschluß auch vibrationssicher sein.

Diese Aufgabe wird erfindungsgemäß mit den Merkmalen des Anspruchs 1 gelöst.

In der Arretierungsstellung legen also die an schwenkbaren Arretierungsschenkeln radial nach außen weisenden Arretierungsvorsprünge das zweite Bauteil sicher an dem ersten Bauteil, auf welchem sich das Gehäuse mit seinem Gehäusekopf abstützt, fest. Sollen die Arretierungsschenkel aus ihrer Arretierungsstellung nach innen verschwenkt werden, um die Arretierungsvorsprünge außer Eingriff zu bringen, braucht lediglich auf den Druckknopf gedrückt zu werden. Dieser wirkt dann mit seinem Auslöserabschnitt auf die zum Gehäusekopf hin geneigten Schrägflächen der Arretierungsschenkel so ein, daß mit zunehmender Axialverschiebung des Druckknopfes die Arretierungsschenkel zunehmend nach innen verschwenkt werden, bis die Arretierungsvorsprünge außer Eingriff kommen. In diesem Moment kann das erste Bauteil zusammen mit dem vollständigen Druckverschluß von dem zweiten Bauteil abgenommen werden. Nach Zurückbewegung des Druckknopfes in seine Ausgangsstellung schwenken die Veriegelungsschenkel wieder radial in ihre Verriegelungsstellung nach außen. Die Verriegelungsvorsprünge sind dabei zweckmäßigerweise so dimensioniert und angeordnet, daß sie in ihrer jetzt wieder eingenommenen Verriegelungsstellung weiter als der Durchmesser der Öffnung des ersten Bauteils nach außen ragen. Dadurch ist der Druckverschluß unverlierbar an dem ersten Bauteil gehalten. Soll das erste Bauteil wieder an dem zweiten Bauteil festgelegt werden, braucht ersteres lediglich so an das letztere herangeführt zu werden, daß der Druckverschluß mit seinem Gehäuse in das Loch des zweiten Bauteils eingeführt wird. Hierbei wirken die Keilflächen mit dem Rand des Loches des zweiten Bauteils so zusammen, daß die Verriegelungsschenkel radial nach innen gedrückt werden, bis die Verriegelungsvorsprünge unter Aufspreizung der Arretierungsschenkel wieder hinter dem zweiten Bauteil einrasten.

Die Vibrationssicherheit kann dadurch besonders verbessert werden, daß dem Gehäuse ein federelastisches Element zum Einspannen des zweiten Bauteils gegen das erste Bauteil mittels der Arretierungsvorsprünge zugeordnet ist.

Wenn der Druckknopf in das Gehäuse eingerastet und in diesem axial verdrehsicher geführt ist, ist der Druckknopf unverlierbar in dem Gehäuse aufgenommen und seine Funktion zuverlässig gewährleistet.

Bei einer weiteren Ausgestaltung der Erfindung stützt sich der Druckknopf auf einer Rückstellfeder gegen das Gehäuse bzw. das Gehäuseteil, also relativ zu dem Gehäuse, ab, nimmt der Druckknopf nach seiner Betätigung zwangsläufig wieder seine Ausgangsverriegelungsstellung ein.

Dabei wird beispielsweise der Druckknopf mittels der sich an dem Gehäuse, ggf. über einen Federteller abstützenden Rückstellfeder mit einer gehäusekopfseitigen Schulter in Schließ richtung an eine innere Gegenschulter bzw. einen Anschlag des Gehäuses gedrückt.

Wenn die Arretierungsschenkel Teil eines Gehäuseeinsatzes sind und die Arretierungsschenkel mit ihren Arretierungsvorsprüngen in Verriegelungsstellung durch Öffnungen der Seitenwandung des Gehäuses aus dem Gehäuse austreten, wird bei kompakter und stabiler Bauweise eine einfache Montage des Druckverschlusses gewährleistet. Für Gehäuse und Arretierungsschenkel können dabei unabhängig voneinander die am besten geeigneten Materialien gewählt werden.

Im Rahmen der Erfindung ist es möglich, die Arretierungsschenkel von einem Bodenabschnitt des Gehäuseeinsatzes in Richtung des Gehäusekopfes oder in Richtung des Gehäuseendes ragen zu lassen. Im ersteren Fall wird sichergestellt, daß bei Zugbeanspruchung die Verriegelung des zweiten Bauteil gegenüber dem ersten Bauteil noch verbessert wird, während im zweiten Fall bei hinreichend großer Zugbeanspruchung die Arretierungsschenkel außer Eingriff mit dem zweiten Bauteil nach innen schwenken, der Verschluß also gewollt aufgerissen werden kann.

Der gehäusekopfseitige Randbereich der Öffnungen der Seitenwandung des Gehäuses kann jeweils als Anschlag für die Arretierungsschenkel in der aufgespreizten Arretierungsstellung dienen.

Wenn gemäß einer weiteren besonderen Ausgestaltung der Erfindung das z.B. als Gummipuffer ausgebildete federelastische Element auf dem Außenumfang der Seitenwandung des Gehäuses sitzt, und ggf. gehäusekopfseitig an einer Ringschulter des Gehäuses und an dem ersten Bauteil anliegt, kann der Druckverschluß mittels des federelastischen Elements unverlierbar an dem ersten Bauteil gehalten werden.

Die Montage wird weiter erleichtert, wenn auch das Gehäuseende mit Einführungsschrägen ausgestattet ist.

Vorzugsweise hintergreifen die Arretierungsvorsprünge in Arretierungsstellung das zweite Bauteil, so daß besondere Mittel zur Sicherung des Druckverschlusses auf der Rückseite des zweiten Bauteils entbehrlich sind.

Die wesentlichen Teile des Druckverschlusses, wie Gehäuse, Gehäuseeinsatz und Druckknopf können aus Kunststoff bestehen.

Anhand der Zeichnung werden nachfolgend Ausführungsbeispiele der Erfindung näher erläutert.

Es zeigen die beiden Figuren im Vertikalschnitt je ein Ausführungsbeispiel für einen die Erfindung aufweisenden Druckverschluß.

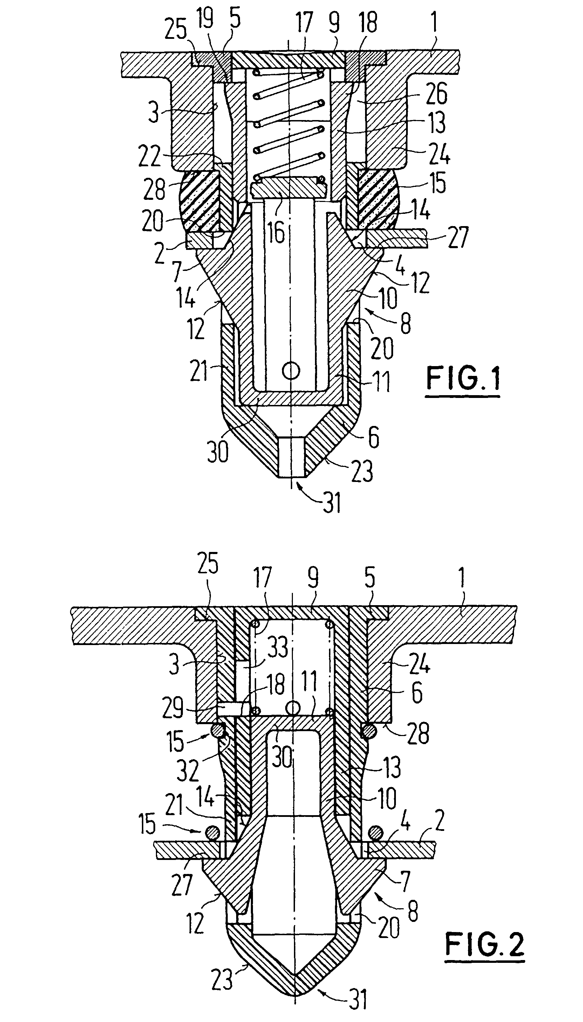

Der in Fig. 1 dargestellte Druckverschluß ist zum vibrationssicheren, aber lösbaren Verbinden zweier Bauteile 1 und 2 bestimmt, wobei das erste Bauteil 1 bspw. die Schallschutzhaube eines Kraftfahrzeugs und das zweite Bauteil 2 ein für diese bestimmter Halter ist. Das erste Bauteil 1 weist im Bereich der vorzusehenden Verbindung eine hülsenartige Verstärkung 24 auf, welche ein Loch 3 zur Aufnahme des in seinen wesentlichen Teilen z.B. aus Kunststoff bestehenden Druckverschlusses begrenzt.

Der Druckverschluß weist ein Gehäuse 6 auf, welches bspw. nach Art eines Clips unverlierbar in das Loch 3 einsetzbar ist, wobei sich ein erweiterter Gehäusekopf 5 auf einer zurückgesetzten Anlageschulter 25 abstützt. Auf den aus dem Loch 3 herausragenden Abschnitt des Gehäuses 6 ist ein als Gummipuffer dargestelltes federelastisches Element 15 aufgeschoben. Das federelastische Element 15 stützt sich gehäusekopfseitig teilweise an der Stirnfläche 28 der Verstärkung 24 und teilweise an einer Ringschulter 22 des Gehäuses 6 ab. Je nach der Festigkeit des Sitzes des federelastischen Elements 15 kann dieses die unverlierbare Halterung des Druckverschlusses an dem Bauteil 1 sichern oder jedenfalls zu ihr beitragen. Das Gehäuseende 31 ist mit Einführungsschrägen 23 ausgestattet, um das Einführen in das Loch 3 des ersten Bauteils 1 und später, nach entsprechender Zusammenführung und Ausrichtung, auch in das Loch 4 des zweiten Bauteils 2 zu erleichtern.

Kopfseitig ist in das Gehäuse 6 ein Druckknopf 9 eingerastet. Der Druckknopf 9 ist gegen eine Rückstellfeder 17 in dem Gehäuse 6 axial verschiebbar, welches sich auf der dem Gehäusekopf 5 abgewandten Seite auf einem gehäusefesten Federteller 16 abstützt. In der dargestellten Ausgangsstellung (Verriegelungsstellung) liegt der Druckknopf 9 mit rückwärtigen Schultern 18 an Gegenschultern 19 des Gehäuses 6 an. Die die Schulter 18 tragenden Wandbschnitte des Druckknopfs 9 können beim anfänglichen Einsetzen des Druckknopfs 9 in die Gehäuseöffnung elastisch nach innen ausweichen und sich, nachdem sie die Gegenschulter 19 passiert haben, in die dort vorgesehene Aussparung 26 der Seitenwandung 21 des Gehäuses 6 aufspreizen. Der Druckknopf 9 ist zu einem Auslöseabschnitt 13 für das Zusammenwirken mit radial ein- und ausschwenkbaren Arretierungsschenkeln 10 verlängert.

Die Arretierungsschenkel 10 sind von einem Bodenabschnitt 30 in Richtung des Gehäusekopfes 5 ragende Teile eines Gehäuseeinsatzes 11. Die Arretierungsschenkel 10 tragen auf ihrer Außenseite radiale Arretierungsvorsprünge 7 zum Hintergreifen des zweiten Bauteils 2. Auf der dem Gehäusekopf 5 zugewandten Seite haben die Arretierungsschenkel 10 gehäusekopfzugewandte Schrägflächen 14 für das Zusammenwirken mit dem Auslöseabschnitt 13 des Druckknopfes 9, wenn auf diesen gedrückt wird. Auf der dem Gehäusekopf 5 abgewandten Seite haben die Arretierungsschenkel 10 zum Gehäuseende hin gewandte Keilflächen 12. Beim Einsetzen des Gehäuseeinsatzes 11 in die Gehäuseöffnung werden die Arretierungsschenkel 10 aufgrund der Schrägflächen 12 zwangsläufig nach innen gedrückt, bis die Arretierungsvorsprünge 7 durch Öffnungen 20 in der Seitenwandung 21 des Gehäuses 6 nach außen federn. Der Gehäuseeinsatz 11 ist damit unverlierbar in dem Gehäuse 6 aufgenommen. Beim Einsetzen der Einheit aus Gehäuse 6, Druckknopf 9, Gehäuseeinsatz 11, Rückstellfeder 17 und federelastischem Element 15, welche als solche vormontierbar sind, in die zueinander zur Deckung gebrachten Löcher 3 und 4 der Bauteile 1 und 2 weichen die Arretierungsschenkel 10 aufgrund der mit den Lochrändern zusammenwirkenden Keilflächen 12 ebenfalls elastisch nach innen aus, bis die Arretierungsvorsprünge 7 hinter dem zweiten Bauteil 2 in die in der Figur dargestellte Verriegelungsstellung einrasten. Der Abstand zwischen der radialen Klemmfläche 27 der Arretierungsvorsprünge 7 und der rückwärtigen Stirnfläche 28 der Verstärkung 24 ist dabei unter Berücksichtigung der Stärke des Bauteils 2 und der Höhe des federelastischen Elements 15 so bemessen, daß das federelastische Element 15 unter einer gewissen Vorspannung gehalten wird.

Beim Drücken auf den Druckknopf 9 wirkt der Auslöseabschnitt 13 des Druckknopfs 9 auf die Schrägflächen 14, welche in der aufgespreizten Verriegelungsstellung der Verriegelungsschenkel 10 an dem oberen Rand der Öffnungen 20 anliegen, und die Arretierungsschenkel 10 werden unter Freigabe des zweiten Bauteils 2 von den Arretierungsvorsprüngen 7 radial nach innen gedrückt. Bei gedrücktem Druckknopf 9 kann nicht nur das zweite Bauteil 2 aus seiner Befestigung an dem ersten Bauteil 1 gelöst und abgenommen, sondern der gesamte Druckverschluß bei Bedarf auch aus dem Loch 3 des ersten Bauteils 1 herausgenommen werden, wenn er nicht anderweitig noch zusätzlich mit dem ersten Bauteil 1 verankert ist.

Der in Fig. 2 dargestellte Druckverschluß unterscheidet sich von dem ersten Ausführungsbeispiel im wesentlichen dadurch, daß die Arretierungsschenkel 10 des Gehäuseeinsatzes 11 in die entgegengesetzte Richtung, also in Richtung des Gehäuseendes 31 weisen, anstatt wie bei dem ersten Ausführungsbeispiel in Richtung des Gehäusekopfes 5. Während bei dem Druckverschluß gemäß Fig. 1 unter Zugbeanspruchung die Arretierungsschenkel 10 nur noch weiter nach außen gedrückt werden, die Verriegelung zwischen den Bauteilen 1, 2 also noch verbessert wird, schwenken die Arretierungsschenkel 10 bei dem Druckverschluß gemäß Fig. 2 nach innen, wenn ein vorgegebenes Maß an Zugbeanspruchung überschritten wird. Der zweite Druckverschluß ist daher gewollt "aufreißbar".

Das federelastische Element 15 ist gemäß Fig. 2 als Schraubenfeder ausgebildet, deren Rückstellkraft wesentlich größer ist als diejenige der Rückstellfeder 17, mit welcher sich der Druckknopf 9 an dem Bodenabschnitt 30 des Gehäuseeinsatzes 11 abstützt. Die Schraubenfeder 15 ist mit ihrem gehäusekopfseitigen Ende in einer Umfangsnut 32 des Gehäuses 6 eingelassen, stützt sich dort auch an der Stirnfläche 28 der Verstärkung 24 des ersten Bauteils 1 ab, während sie mit ihrem gehäuseendseitigen Ende an dem zweiten Bauteil 2 anliegt.

Mittels eines Anschlages 29 und eines Schlitzes 33 vorgegebener Länge in der Seitenwandung des Druckknopfes 9 ist dessen Verschiebeweg festgelegt.

### Bezugszeichenliste:

- 1: Bauteil
- 2: Bauteil
- 3: Loch
- 4: Loch
- 5: Gehäusekopf
- 6: Gehäuse
- 7: Arretierungsvorsprünge
- 8: Arretierungsmittel
- 9: Druckknopf
- 10: Arretierungsschenkel
- 11: Gehäuseeinsatz
- 12: Keilflächen
- 13: Auslöseabschnitt
- 14: Schrägflächen
- 15: federelastisches Element
- 16: Federteller
- 17: Rückstellfeder
- 18: Schulter
- 19: Gegenschulter
- 20: Öffnungen
- 21: Seitenwandung
- 22: Ringschulter
- 23: Einführungsschrägen
- 24: Verstärkung
- 25: Anlageschulter
- 26: Aussparung
- 27: Klemmfläche
- 28: Stirnfläche
- 29: Anschlag
- 30: Bodenabschnitt
- 31: Gehäuseende
- 32: Umfangsnut
- 33: Schlitz

## Patentansprüche

1. Druckverschluß für das lösbare Verbinden zweiter Bauteile (1, 2), mit einem durch zueinander fluchtende Löcher (3, 4) der zu verbindenden Bauteile (1, 2) zu führenden und sich kopfseitig auf dem ersten Bauteil (1) abstützenden Gehäuse (6), mit an elastisch radial schwenkbaren Arretierungsschenkeln angeordnete Arretierungsvorsprünge (7) aufweisenden Arretierungsmitteln (8) für das Festlegen des zweiten Bauteils (2) an dem ersten Bauteil in Verriegelungsstellung und mit einem in dem Gehäuse (6) axial verschiebbar aufgenommenen Druckknopf (9) zum Lösen der Arretierungsmittel (8), wobei die Arretierungsschenkel (10) äußere, zum Gehäuseende hin geneigte Keilflächen (12) für das Einführen des Gehäuses (6) in die Löcher (3, 4) der Bauteile (1, 2) aufweist, **dadurch gekennzeichnet**, daß die Arretierungsschenkel (10) an dem Gehäuse (6) bzw. einem Gehäuseeinsatz (11) angeordnet sind, daß die Arretierungsschenkel (10) zum Gehäusekopf (5) hin geneigte, für das Zusammenwirken mit einem Auslöseabschnitt (13) des Druckknopfs (9) bestimmte Schrägflächen (14) aufweisen, und daß der Druckknopf (9) bei Betätigung mit dem Auslöseabschnitt (13) auf die Schrägflächen (14) einwirkt, um die Arretierungsschenkel (10) elastisch ausweichend radial nach innen zu drücken und damit die Arretierungsvorsprünge (7) aus ihrer Verriegelungsstellung zu bringen.

2. Druckverschluß nach Anspruch 1, **dadurch gekennzeichnet**, daß dem Gehäuse (6) ein federelastisches Element (15) zum Einspannen des zweiten Bauteils (2) gegen das erste Bauteil (1) mittels der Arretierungsvorsprünge (7) zugeordnet ist.

3. Druckverschluß nach Anspruch 1 oder 2, **dadurch gekennzeichnet**, daß der Druckknopf (9) in das Gehäuse (6) eingerastet und in ihm axial verdrehsicher geführt ist.

4. Druckverschluß nach einem der Ansprüche 1 bis 3, **dadurch gekennzeichnet**, daß sich der Druckknopf (9) auf einer Rückstellfeder (17) gegen das Gehäuse (6) bzw. den Gehäuseeinsatz (11) abstützt.

5. Druckverschluß nach einem oder mehreren der vorhergehenden Ansprüche, **dadurch gekennzeichnet**, daß der Druckknopf (9) mittels der sich an dem Gehäuse (6) ggf. über einen Federteller (16) abstützenden Rückstellfeder (17) mit einer gehäusekopfseitigen Schulter (18) in Schließrichtung an eine innere Gegenschulter (19) bzw. einem Anschlag (29) des Gehäuses (6) gedrückt wird.

6. Druckverschluß nach einem oder mehreren der vorhergehenden Ansprüche, **dadurch gekennzeichnet**, daß die Arretierungsschenkel (10) Teil eines Gehäuseeinsatzes (11) sind und die Arretierungsschenkel (10) mit ihren Arretierungsvorsprüngen (7) in Verriegelungsstellung durch Öffnungen (20) der Seitenwandung (21) des Gehäuses (6) aus dem Gehäuse (6) treten.

7. Druckverschluß nach Anspruch 6, **dadurch gekennzeichnet**, daß die Arretierungsschenkel (10) von einem Bodenabschnitt (30) des Gehäuseeinsatzes (11) in Richtung des Gehäusekopfes (5) oder in Richtung des Gehäuseendes (31) ragen.

8. Druckverschluß nach Anspruch 6 oder 7, **dadurch gekennzeichnet**, daß der gehäusekopfseitige Randbereich der Öffnungen (20) der Seitenwandung (21) des Gehäuses (6) als Anschlag für die Arretierungsschenkel (10) in der aufgespreizten Arretierungsstellung dient.

9. Druckverschluß nach einem oder mehreren der vorhergehenden Ansprüche, **dadurch gekennzeichnet**, daß das z.B. als Gummipuffer ausgebildete federelastische Element (15) auf dem Außenumfang der Seitenwandung (21) des Gehäuses (6) sitzt, und ggf. gehäusekopfseitig an einer Ringschulter (22) des Gehäuses (6) und an dem ersten Bauteil (1) anliegt.

10. Druckverschluß nach einem oder mehreren der vorhergehenden Ansprüche, **dadurch gekennzeichnet**, daß das Gehäuseende (31) mit Einführungsschrägen (23) ausgestattet ist.

11. Druckverschluß nach einem oder mehreren der vorhergehenden Ansprüche, **dadurch gekennzeichnet**, daß die Arretierungsvorsprünge (7) in Arretierungsstellung das zweite Bauteil (2) hintergreifen.

12. Druckverschluß nach einem oder mehreren der vorhergehenden Ansprüche, **dadurch gekennzeichnet**, daß das Gehäuse (6) und/oder der Gehäuseeinsatz (11) und/oder der Druckknopf (9) aus Kunststoff bestehen bzw. besteht.

## Claims

1. Push fastener for releasable joining of two elements (1, 2), with a housing (6) supported on the head side on the first element (1) and guiding the elements to be joined (1, 2) by holes aligned with each other (3,4), with locking means (8) with locking projections (7) arranged on elastic radially locking legs, where the said means attach the second element (2) to the first element in the locking position, and with a push button (9) held axially displaceably in the housing (6) for releasing the locking means (8), where the locking legs (10) have external wedge surfaces (12) angled towards the housing end for the insertion of the housing (6) in the holes (3,4) in the elements (1, 2), characterized in that the locking legs (10) are arranged on the housing (6) or a housing insert (11), that the locking legs (10) have certain inclined surfaces (14) angled towards the housing head (5) to cooperate with a release section (13) of the push button (9), and that the push button (9), on operation with the release section (13), acts on the inclined surfaces (14) in order to press the locking legs (10) inwards with an elastic radial movement and thus bring the locking projections (7) out of their locking position.

2. Push fastener according to claim 1, characterized in that allocated to the housing (6) is a spring elastic element (15) for clamping the second element (2) against the first element (1) by means of the locking projections (7).

3. Push fastener according to claim 1 or 2, characterized in that the push button (9) engages in the housing (6) and is guided axially in this in a twist-free manner.

4. Push fastener according to any of claims 1 to 3, characterized in that the push button (9) is supported on a return spring (17) against the housing (6) or housing insert (11).

5. Push fastener according to one or more of the previous claims, characterized in that the push button (9) is pressed with a shoulder (18) on the housing head side against an inner counter shoulder (19) or a stop (29) of the housing (6) in the closing direction by means of the return spring (17) which rests on the housing (6) directly or via a spring plate (16) .

6. Push fastener according to one or more of the previous claims, characterized in that the locking legs (10) are part of the housing insert (11) and the locking legs (10) with their locking projections (7) protrude in the locking position out of the housing (6) through openings (20) of the side wall (21) of the housing (6).

7. Push fastener according to claim 6, characterized in that the locking legs (10) project from a floor section (30) of the housing insert (11) in the direction of the housing head (5) or in the direction of the housing end (31).

8. Push fastener according to claim 6 or 7, characterized in that the peripheral area of the openings (20) of the side wall (21) of the housing (6) on the housing head side serves as a stop for the locking legs (10) in the expanded locking position.

9. Push fastener according to one or more of the previous claims, characterized in that the spring elastic element (15) formed for example as a rubber buffer sits on the outer periphery of the side wall (21) of the housing (6), and lies on the housing head side on a ring shoulder (22) of the housing (6) and on the first element (1).

10. Push fastener according to one or more of the previous claims, characterized in that the housing end (31) is equipped with insertion slopes (23).

11. Push fastener according to one or more of the previous claims, characterized in that the locking projections (7) engage behind the second element (2) in the locking position.

12. Push fastener according to one or more of the previous claims, characterized in that the housing (6) and/or the housing insert (11) and/or the push button (9) consist of plastic.

## Revendications

1. Dispositif de fermeture à pression pour le raccordement amovible de deux éléments de construction (1,2), avec un logement (6) s'appuyant, côté tête, sur le premier élément de construction (1) et à insérer à travers des trous alignés entre eux (3, 4) des éléments de construction (1, 2) à raccorder, avec des moyens de blocage(8), présentant des éléments de blocage en saillie (7) disposés sur des branches de blocage pouvant pivoter élastiquement radialement, destinés à la fixation du second élément de construction (2) sur le premier élément de construction en position de verrouillage, et avec un bouton-poussoir (9) placé de façon axialement coulissante dans le logement (6) destiné à débloquer le moyen de blocage (8), dans lequel les branches de blocage (10) présentent des surfaces de coin extérieures (12) inclinées vers l'extrémité du logement pour l'insertion du logement (6) dans les trous (3, 4) des éléments de construction (1, 2), caractérisé en ce que les branches de blocage (10) sont disposées dans le logement (6) ou dans un insert du logement (11), en ce que les branches de blocage (10) inclinées vers la tête du logement (5) présentent des surfaces obliques (14) définies pour coopérer avec un segment de déblocage (13) du bouton-poussoir (9), et en ce que le bouton-poussoir (9) lorsqu'il est actionné avec le segment de déblocage (13) agit sur les surfaces obliques (14) pour comprimer les branches de blocage (10) en les déviant élastiquement radialement vers l'intérieur et, ce faisant, pour amener les éléments de blocage en saillie (7) hors de leur position de verrouillage.

2. Dispositif de fermeture à pression selon la revendication 1, caractérisé en ce qu'il est associé au logement(6) un élément à déformation élastique (15) pour serrer le second élément de construction (2) contre le premier élément de construction (1) au moyen des éléments de blocage en saillie (7).

3. Dispositif de fermeture à pression selon la revendication 1 ou 2, caractérisé en ce que le bouton-poussoir (9) est introduit dans le logement (6) en s'y encliquetant et de façon protégée contre une torsion axiale.

4. Dispositif de fermeture à pression selon l'une des revendications 1 à 3, caractérisé en ce que le bouton-poussoir (9) s'appuie sur un ressort de rappel (17) contre le logement (6) ou l'insert du logement (11).

5. Dispositif de fermeture à pression selon l'une ou plusieurs des revendications précédentes, caractérisé en ce que le bouton-poussoir (9) est poussé, au moyen du ressort de rappel (17) s'appuyant sur le logement (6) ou par l'intermédiaire d'une coupelle de ressort (16) avec un épaulement côté tête du logement (18) dans la direction de fermeture, contre un contre-épaulement intérieur (19) ou une butée (29) du logement (6).

6. Dispositif de fermeture à pression selon l'une ou plusieurs des revendications précédentes, caractérisé en ce que les branches de blocage (10) font partie d'un insert du logement (11) et en ce que les branches de blocage (10) dépassent du logement (6) avec leurs éléments de blocage faisant saillie (7) en position de verrouillage à travers des ouvertures (20) de la paroi latérale (21) du logement (6).

7. Dispositif de fermeture à pression selon la revendication 6, caractérisé en ce que les branches de blocage (10) sortent d'un segment de fond (30) de l'insert du logement (11) dans la direction de la tête du logement (5) ou dans la direction de l'extrémité du logement (31).

8. Dispositif de fermeture à pression selon la revendication 6 ou 7, caractérisé en ce que la zone de bord, côté tête du logement, des ouvertures (20) de la paroi latérale (21) du logement (6), sert de butée aux branches de blocage (10) en position de blocage écartée.

9. Dispositif de fermeture à pression selon l'une ou plusieurs des revendications précédentes, caractérisé en ce que élément à déformation élastique (15) conçu par ex. sous forme d'un butoir en caoutchouc, repose sur le pourtour extérieur de la paroi latérale (21) du logement (6), et repose éventuellement, côté tête du logement, sur un épaulement circulaire (22) du logement (6) et sur le premier élément de construction (1).

10. Dispositif de fermeture à pression selon l'une ou plusieurs des revendications précédentes, caractérisé en ce que l'extrémité du logement (31) est pourvue de parties d'insertion obliques (23).

11. Dispositif de fermeture à pression selon l'une ou plusieurs des revendications précédentes, caractérisé en ce que les éléments de blocage faisant saillie (7) s'emboîtent à l'arrière du second élément de construction (2) en position de blocage.

12. Dispositif de fermeture à pression selon l'une ou plusieurs des revendications précédentes, caractérisé en ce que le logement (6) et/ou l'insert du logement (11) et/ou le bouton-poussoir (9) est ou sont en plastique.
